(19) Europäisches Patentamt
European Patent Office
Office européen des brevets

(11) Veröffentlichungsnummer: **0 629 645 A1**

(12) # EUROPÄISCHE PATENTANMELDUNG

(21) Anmeldenummer: **94108615.9**

(51) Int. Cl.[5]: **C08G 64/30**

(22) Anmeldetag: **06.06.94**

(30) Priorität: **18.06.93 DE 4320156**

(43) Veröffentlichungstag der Anmeldung:
**21.12.94 Patentblatt 94/51**

(84) Benannte Vertragsstaaten:
**BE DE ES IT NL**

(71) Anmelder: **BAYER AG**

**D-51368 Leverkusen (DE)**

(72) Erfinder: **Kühling, Steffen, Dr.**
**Gocherweg 5**
**D-40670 Meerbusch (DE)**
Erfinder: **Kauth, Hermann, Dr.**
**Sattlerdyk 6**
**D-47803 Krefeld (DE)**
Erfinder: **Alewelt, Wolfgang, Dr.**
**Stratumer Feld 17**
**D-47809 Krefeld (DE)**

(54) **Verfahren zur Herstellung von thermoplastischen Polycarbonaten.**

(57) Gegenstand der vorliegenden Erfindung ist ein Umesterungsverfahren zur Herstellung von thermoplastischen, lösungsmittelfreien Polycarbonaten unter Verwendung von Katalysatoren, die sich vom Guanidin ableiten.

EP 0 629 645 A1

Gegenstand der vorliegenden Erfindung ist ein Umesterungsverfahren zur Herstellung von thermoplastischen, lösungsmittelfreien Polycarbonaten, ausgehend von aromatischen Diphenolen, Kohlensäurediarylestern und gegebenenfalls Verzweigern und/oder Monophenolen sowie Katalysatoren bei Temperaturen zwischen 80 °C und 400 °C und Drucken von 1 000 mbar bis 0,01 mbar, das dadurch gekennzeichnet ist, daß man Katalysatoren, die sich vom Guanidin ableiten und entweder der Formel (I),

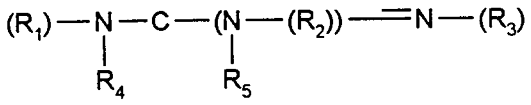 ,

worin
$R_1$, $R_2$, $R_3$. $R_4$, $R_5$, = H, Alkyl, Alkenyl, Cycloalkyl, Cycloalkenyl oder Aryl und
die Reste $R_1$, $R_2$, $R_3$, $R_4$ und $R_5$ gleich oder verschieden sein können,
oder der Formel (II),

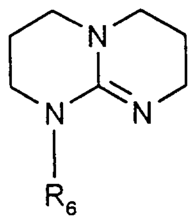

worin
$R_6$ = H, Alkyl, Aryl, Cycloalkyl, Polystyrol-Reste (gegebenenfalls mit Divinylbenzol vernetzt), substituierte Aryle, substituierte Alkyle, wie Hydroxyalkyle, oder ein Rest
$COR_7$ mit $R_7$ = Alkyl, Aryl, NH-Alkyl, NH-Aryl, Alkoxy, Aryloxy und Hydroxyalkyl, sein kann,
oder der Formel (III),

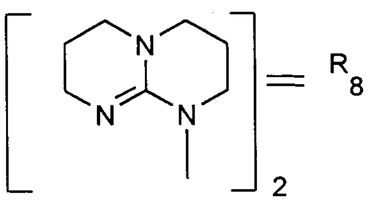

worin
$R_8$ Alkyliden, Cycloalkyliden oder Arylalkyliden sein kann,
oder der Formel (IV),

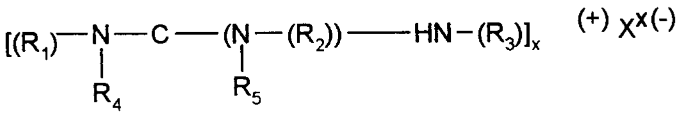

worin
X = Carbonat, Acetat, Nitrat, Hydroxid, Halogenid, Phenolat, Diphenolat, Phosphat, Hydrogenphosphat oder Boranat sein kann und
$R_1$, $R_2$, $R_3$, $R_4$, $R_5$ = H, Alkyl, Alkenyl, Cycloalkyl, Cycloalkenyl oder Aryl und
die Reste $R_1$, $R_2$, $R_3$, $R_4$ und $R_5$ gleich oder verschieden sein können, entsprechen, in Mengen von $10^{-2}$

bis $10^{-8}$ Mol, bezogen auf 1 Mol Diphenol, einsetzt.

Die nach dem erfindungsgemäßen Verfahren hergestellten Polycarbonate sind lösungsmittelfrei, mit heller Eigenfarbe ausgestattet und weitgehend frei von unerwünschten Fehlstellen im Polycarbonat.

Die Herstellung von aromatischen Oligo-/Polycarbonaten nach dem Schmelzeumesterungsverfahren ist literaturbekannt und beispielsweise in dere Encyclopedia of Polymer Science, Vol. 10 (1969), Chemistry and Physics of Polycarbonates, Polymer Reviews, H. Schnell, Vol. 9, John Wiley and Sons, Inc. (1964) sowie der DP 1 031 512 vorbeschrieben.

In den obengenannten Literaturstellen und den dort zitierten Literaturangaben werden als Katalysatoren basische Alkali-, Erdalkali- und Übergangsmetall-hydroxide, -alkoholate, -carbonate, -acetate, -boranate, -hydrogenphosphate und -hydride beschrieben. Bei Verwendung dieser Verbindungen treten bei der Umesterung unerwünschte Nebenreaktionen auf, die zu Fehlstrukturen führen, so daß unkontrolliert verzweigte Polycarbonate (s. auch Vergleichsbeispiel 1) erhalten werden, die bezüglich der optischen und mechanischen Eigenschaften gegenüber linearem Polycarbonat Eigenschaftsdefizite aufweisen.

In der JO 4 122 727 wird ein Polykondensationsverfahren beschrieben, bei dem für die Herstellung des Prepolymeren große Mengen ($10^{-2}$ bis $10^{-5}$ mol bezogen auf Diphenol) an Umesterungskatalysatoren (Al-, Ti-, Ge-, Sn-Salze, Alkylpyridine, Alkylimidazole bzw. deren Salze sowie Phosphine) eingesetzt werden und anschließend mit Hilfe von Alkali-, und Erdalkalimetallsalzen polykondensiert werden. Gegenüber dem erfindungsgemäßen Verfahren müssen jedoch große Mengen Katalysator eingesetzt werden, die zwangsläufig zu einer Minderung der Polycarbonatqualität führen und bezüglich Toxikologie bedenklich sein können. Handelt es sich um flüchtige Katalysatoren, so werden die abgespaltenen Monomere, insbesondere das Monophenol, aus dem in einem technischen Verfahren wieder der Kohlensäurediarylester hergestellt wird, kontaminiert.

In den EP-Anmeldungen 360 578 und 351 168 werden als Katalysatoren für die Polycarbonatherstellung in der Schmelze Ammoniumsalze in Kombination mit Alkali-/Erdalkalimetallsalzen und Borsäure/Borsäureester und in der JA 7 214 742 Tetramethylammoniumhydroxid und in der EP-A 535 261, EP-A 529 093 und 559 953 1,8-Diazabicylco[5.4.0]undec-7-en in Kombination mit Alkali-/Erdalkalimetallsalzen beschrieben. Diese Verfahrensweise führt nicht zu Polycarbonaten mit geringen Fehlstrukturen; für die Ammoniumsalze und das 1,8-Diazabicyclo[5.4.0]undec-7-en gilt überdies das schon obengenannte Verfahren der Flüchtigkeit bzw. der Zersetzung wahrend der Polykondensation.

In dem US-P 3 442 854 werden als Katalysatoren quartäre Ammonium-/Phosphoniumverbindungen als Katalysatoren bei der Schmelzeumesterung beschrieben. Diese Katalysatoren sind flüchtig bzw. zersetzen sich bei den entsprechenden Temperaturen der Polykondensation, so daß das abgespaltene Monophenol kontaminiert wird.

Es wurde nun gefunden, daß man mit Katalysatoren, die sich vom Guanidin ableiten und entweder der Formel (I),

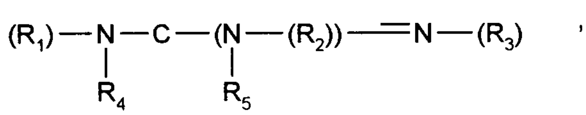

worin

$R_1$, $R_2$, $R_3$. $R_4$, $R_5$, = H, Alkyl, Alkenyl, Cycloalkyl, Cycloalkenyl oder Aryl und die Reste R, $R_2$, $R_3$, $R_4$ und $R_5$ gleich oder verschieden sein können,

oder der Formel (II),

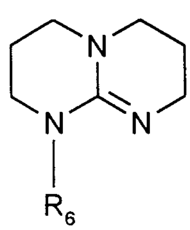

worin

$R_6$ = H, Alkyl, Aryl, Cycloalkyl, Polystyrol-Reste (gegebenenfalls mit Divinylbenzol vernetzt), substituierte Aryle, substituierte Alkyle, wie Hydroxyalkyle, oder ein Rest

$COR_7$ mit $R_7$ = Alkyl, Aryl, NH-Alkyl, NH-Aryl, Alkoxy, Aryloxy und Hydroxyalkyl, sein kann,

oder der Formel (III),

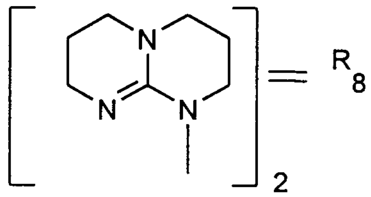

worin

$R_8$ Alkyliden, Cycloalkyliden oder Arylalkyliden sein kann,

oder der Formel (IV)

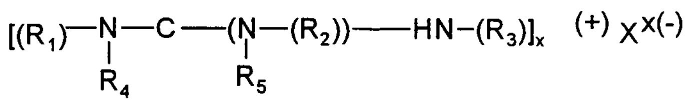

worin

X = Carbonat, Acetat, Nitrat, Hydroxid, Halogenid, Phenolat, Diphenolat, Phosphat, Hydrogenphosphat oder Boranat sein kann und

$R_1$, $R_2$, $R_3$, $R_4$, $R_5$ = H, Alkyl, Alkenyl, Cycloalkyl, Cycloalkenyl oder Aryl und

die Reste $R_1$, $R_2$, $R_3$, $R_4$ und $R_5$ gleich oder verschieden sein können, entsprechen, zu farbhellen Polycarbonaten gelangen kann und die eingesetzten Katalysatoren überraschenderweise nicht flüchtig sind und die so katalysiert hergestellten Polycarbonate weitgehend frei von unerwünschten Fehlstellen im Polycarbonat sind.

Weitgehend frei von unerwünschten Fehlstellen im Polycarbonat im Sinne des erfindungsgemäßen Verfahrens heißt, daß der Gehalt an Verzweiger der Formel (Va):

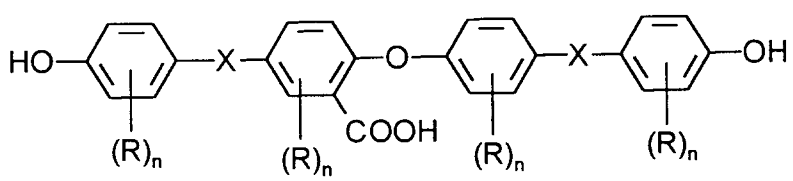

(Va)

mit

X = $C_1$-$C_8$-Alkyliden oder Cycloalkyliden, S oder eine Einfachbindung und

R = $CH_3$, Cl oder Br und

n = Null, 1 oder 2,

im Polycarbonat einen Wert nach Totalverseifung und HPLC-Bestimmung von 300 ppm nicht übersteigt.

Für das erfindungsgemäße Verfahren geeignete Diphenole sind solche der Formel (Vb)

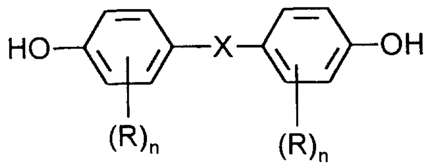

(Vb) ,

worin

X = $C_1$-$C_8$-Alkyliden oder Cycloalkyliden, S oder eine Einfachbindung und

R = $CH_3$, Cl oder Br und n Null, 1 oder 2 ist.

Bevorzugte Diphenole sind z.B.:

4,4'-Dihydroxydiphenyl,
4,4'-Dihydroxydiphenylsulfid,
2,2-Bis-(4-hydroxyphenyl)-propan,
2,2-Bis-(3,5-dimethyl-4-hydroxyphenyl)-propan,
2,2-Bis-(3,5-dichlor-4-hydroxyphenyl)-propan,
2,2-Bis-(3,5-dibrom-4-hydroxyphenyl)-propan,
1,1-Bis-(4-hydroxyphenyl)-cyclohexan und
1,1-Bis-(4-hydroxyphenyl)-3,3,5-trimethylcyclohexan.

Besonders bevorzugte Diphenole aus den vorstehend genannten sind 2,2-Bis-(4-hydroxyphenyl)-propan und 1,1-Bis-(4-hydroxyphenyl)-3,3,5-trimethylcyclohexan.

Die vorstehenden Diphenole können zur Herstellung von Homopolymeren oder Copolymeren eingesetzt werden.

Die Polycarbonate können durch den Einsatz geringer Mengen Verzweiger bewußt und kontrolliert verzweigt werden. Einige geeignete Verzweiger sind:

Phloroglucin,
4,6-Dimethyl-2,4,6-tri-(4-hydroxyphenyl)-hepten-2,
4,6-Dimethyl-2,4,6-tri-(4-hydroxyphenyl)-heptan,
1,3,5-Tri-(4-hydroxyphenyl)-benzol,
1,1,1-Tri-(4-hydroxyphenyl)-ethan,
Tri-(4-hydroxyphenyl)-phenylmethan,
2,2-Bis-[4,4-bis-(4-hydroxyphenyl)-cyclohexyl]-propan,
2,4-Bis-(4-hydroxyphenyl-isopropyl)-phenol,
2,6-Bis-(2-hydroxy-5'-methyl-benzyl-4-methylphenol,
2-(4-Hydroxyphenyl)-2-(2,4-dihydroxyphenyl)-propan,
Hexa-(4-(4-hydroxyphenyl-isopropyl)-phenyl)-orthoterephthalsäureester,
Tetra-(4-hydroxyphenyl)-methan,
Tetra-(4-(4-hydroxyphenyl-isopropyl)-phenoxy)-methan,
1,4-Bis-(4'4''-dihydroxytriphenyl)-methyl)-benzol und insbesondere
$\alpha,\alpha',\alpha''$-Tris-(4-hydroxyphenyl)-1,3,5-triisoprenylbenzol.

Weitere mögliche Verzweiger sind 2,4-Dihydroxybenzoesäure, Trimesinsäure, Cyanurchlorid und 3,3-Bis-(3-methyl-4-hydroxyphenyl)-2-oxo-2,3-dihydroindol.

Die gegebenenfalls mitzuverwendenden 0,05 bis 2 mol-%, bezogen auf eingesetzte Diphenole, an Verzweigern, können mit den Diphenolen zusammen eingesetzt werden.

Kohlensäurediester im Sinne vorliegender Erfindung sind Di-$C_6$-$C_{14}$-Arylester, vorzugsweise die Diester von Phenol oder alkylsubstituierten Phenolen, also Diphenylcarbonat oder z.B. Dikresylcarbonat. Bezogen auf 1 mol Bisphenol werden die Kohlensäurediester in 1,01 bis 1,30 mol, bevorzugt in 1,02 bis 1,15 mol, eingesetzt.

Es ist darauf zu achten, daß die Reaktionskomponente, also die Diphenole und die Kohlensäurediarylester frei von Alkali- und Erdalkaliionen sind, wobei Mengen von Kleiner 0,01 ppm an Alkali- und Erdalkaliionen toleriert werden können. Derart reine Kohlensäurediarylester bzw. Diphenole sind erhältlich, indem man die Kohlensäurediarylester bzw. Diphenole umkristallisiert, wäscht oder destilliert. Beim erfindungsgemäßen Verfahren soll der Gehalt an Alkali- und Erdalkalimetallionen sowohl im Diphenol als auch im Kohlensäurediester einen Wert von <0,01 ppm betragen.

Katalysatoren im Sinne des erfindungsgemäßen Verfahrens sind beispielsweise:

1,1,3,3-Tetramethylguanidin,
Guanidincarbonat,

2-Guanidinobenzimidazol,
1,3,4,6,7,8-Hexahydro-1-methyl-2-H-pyrimidino-[1,2a]-pyrimidin,
1,5,7-Triazabicyclo-[4,4,0]-dec-5-en,
7-Methyl-1,5,7-triazabicyclo-[4,4,0]-dec-5-en,
7-Phenyl-1,5,7-triazabicyclo-[4,4,0]-dec-5-en,
7-Naphthyl-1,5,7-triazabicyclo-[4,4,0]-dec-5-en,
Diphenylguanidin,
Triphenylguanidin
bevorzugt sind:
1,5,7-Triazabicyclo-[4,4,0]-dec-5-en,
7-Phenyl-1,5,7-triazabicyclo-[4,4,0]-dec-5-en,
7-Methyl-1,5,7-triazabicyclo-[4,4,0]-dec-5-en,
7-Cumylphenyl-1,5,7-triazenbicyclo-[4,4,0]-decen
7-Hexyliden-1,5,7-triazabicyclo-[4,4,0]-decen
7,7'-Hexyliden-di-1,5,7-triazabicyclo-[4,4,0]-dec-5-en,
7,7'-Decyliden-di-1,5,7-triazabicyclo-[4,4,0]-dec-5-en und
7,7'-Dodecyliden-di-1,5,7-triazabicyclo-[4,4,0]-dec-5-en.

Diese Katalysatoren werden in Mengen von $10^{-2}$ bis $10^{-8}$ mol, bezogen auf 1 mol Diphenol, eingesetzt.

Die Katalysatoren können auch in Kombination (zwei oder mehrere) miteinander eingesetzt werden.

Die Katalysatoren können auch in Kombination (zwei oder mehrere) mit Alkali-/Erdalkalimetallkatalysatoren eingesetzt werden. Hierbei kann es vorteilhaft sein die Alkali-/Erdalkalimetallkatalysatoren zu einem späteren Zeitpunkt (z.B. nach der Oligocarbonatsynthese bei der Polykondensation in der zweiten Stufe) zuzusetzen. Die Zugabe des Alkali-/Erdalkalimetallkatalysators kann z.B. als Feststoff oder als Lösung in Wasser, Phenol, Oligocarbonat, Polycarbonat erfolgen.

Die Alkali-/Erdalkalimetallkatalysatoren werden bevorzugt in Mengen von $10^{-8}$ bis $10^{-4}$ Mol bezogen auf 1 Mol Diphenol, besonders bevorzugt in einer Konzentration von $10^{-7}$ bis $10^{-5}$ Mol eingesetzt. Es sind beispielsweise die Lithium-, Natrium-, Kalium-, Cäsium-, Calzium-, Barium-, Magnesium-, -hydroxide, -carbonate, -halogenide, -phenolate, -diphenolate, -fluoride, -acetate, -phosphate, -hydrogenphosphate, -boranate. Die Mitverwendung von Alkali- bzw. Erdalkalimetallkatalysatoren widerspricht nicht der vorstehend erwähnten Forderung nach Reinheit der Reaktionspartner.

Die Polycarbonatherstellung kann in einer Stufe durchgeführt werden; die aromatischen Dihydroxyverbindung und die Kohlensäurediester werden dann nach den aus der Literatur üblichen Polykondensationsbedingungen umgesetzt. Dies sind beispielsweise das Aufschmelzen der aromatischen Dihydroxyverbindung und des Kohlensäurediesters bei Temperaturen von 80 bis 250 °C, bevorzugt 100 bis 230 °C, besonders bevorzugt 120 bis 190 °C unter normalem Druck in 0 bis 5 Stunden, bevorzugt 0,25 bis 3 Stunden. Die Zugabe des erfindungsgemäßen Katalysators oder Kombinationen der erfindungsgemäßen Katalysatoren mit Alkali-/Erdalkalikatalysatoren kann vor dem Aufschmelzen oder zu den aufgeschmolzenen Edukten erfolgen. Nun wird durch Anlegen von Vakuum und Erhöhung der Temperatur durch Abdestillieren des Monophenols ein Oligocarbonat aus der aromatischen Dihydroxyverbindung und dem Kohlensäurediester hergestellt. Im weiteren wird dann bei der Polykondensation durch weiteres Erhöhen der Temperatur auf 240 bis 400 °C und Erniedrigung des Drucks bis auf 0,01 mbar das Polycarbonat hergestellt.

Es kann aber auch vorteilhaft sein, die Polykondensation in zwei Stufen (1. Stufe Oligocarbonatherstellung unter Verwendung der erfindungsgemäßen Katalysatoren, 2. Stufe Polycarbonatherstellung unter Zugabe von Alkali-/Erdalkalimetallkatalysatoren) durchzuführen.

Die Oligocarbonate der ersten Stufe weisen mittlere Molekulargewichte $\overline{M}_w$ von von 3 000 bis 24 000, bevorzugt 5 000 bis 20 000 auf, ermittelt durch Messung der rel. Lösungsviskosität in Dichlormethan oder in Mischungen gleicher Gewichtsmengen Phenol/o-Dichlorbenzol geeicht durch Lichtstreuung. Die Molekulargewichte der Oligocarbonate der 1. Stufe richten sich danach, wie die gewünschte Endviskosität der Polycarbonate sein soll; so werden durch die Kondensation von niedrigmolekularen Oligocarbonaten niedrigmolekulare Polycarbonate in der 2. Stufe erhalten und durch die Kondensation von höhermolekularen Oligocarbonaten höhermolekulare Polycarbonate erhalten. Die Temperatur zur Herstellung dieser Oligocarbonate liegt zwischen 100 °C bis 290 °C, bevorzugt zwischen 150 °C und 280 °C. Die bei der Umesterung zum Oligocarbonat entstehenden Monophenole werden durch Anlegen von Vakuum 1 bar bis 0,5 mbar, bevorzugt <500 mbar bis 1 mbar, entfernt. In der zweiten Stufe, der Polykondensation des Oligocarbonats, kann durch Zugabe eines Alkali-/Erdalkalimetallkatalysators zum Oligocarbonat und durch weiteres Erhöhen der Temperatur auf 230 bis 400 °C, bevorzugt 250 bis 320 °C und einem Druck <100 mbar bis 0,01 mbar das Polycarbonat hergestellt werden.

Die Reaktion der aromatischen Dihydroxyverbindung und des Kohlensäurediesters kann im Sinne des erfindungsgemäßen Verfahrens kontinuierlich oder diskontinuierlich beispielsweise in Rührkesseln, Dünnschichtverdampfern, Rührkesselkaskaden, Extrudern, Knetern, einfachen Scheibenreaktoren und Hochviskosscheibenreaktoren durchgeführt werden.

Die Umsetzung des Oligocarbonats zum Polycarbonat kann auch entsprechend der WO 90/7536 bzw. des EP-A 338 085 erfolgen, indem das erfindungsgemäß hergestellte Oligocarbonat kristallisiert und in der festen Phase festphasenpolykondensiert wird.

Die aromatischen Polycarbonate des erfindungsgemäßen Verfahrens sollen mittlere Gewichtsmolmassen $\overline{M}_w$ von 18 000 bis 60 000, vorzugsweise 19 000 bis 40 000, haben, ermittelt durch Messung der rel. Lösungsviskosität in Dichlormethan oder in Mischungen gleicher Gewichtsmengen Phenol/o-Dichlorbenzol, geeicht durch Lichtstreuung.

Die erfindungsgemäß hergestellten Polycarbonate haben eine helle Eigenfarbe, besitzen einen niedrigen OH-Endgruppengehalt von <700 ppm, bevorzugt <400 ppm, besonders bevorzugt <250 ppm sind hydrolyse- und thermostabil.

Zur Begrenzung der mittleren Gewichtsmolmassen $\overline{M}_w$ der Polymeren können in bekannter Weise (EP 360 578) Molmassenregler, wie beispielsweise Alkylphenol (Isooctylphenolphenol, t-Butylphenol, Cumylphenol), in den erforderlichen Mengen eingesetzt werden.

Zur Verbesserung der Eigenschaften können den erfindungsgemäß hergestellten Polycarbonaten Hilfs- und Verstärkungsstoffe zugemischt werden. Als solche sind u.a. in Betracht zu ziehen: Stabilisatoren (z.B. UV-, Thermo-, Gammastrahlenstabilisatoren), Antistatika, Fließhilfsmittel, Entformungsmittel, Brandschutzmittel, Pigmente, fein zerteilte Mineralien, Faserstoffe, z.B. Alkyl- und Arylphosphite, -phosphate, -phosphane, niedermolekulare Carbonsäureester, Halogenverbindungen, Salze, Kreide, Quarzmehl, Glas- und Kohlenstoffasern.

Weiterhin können den erfindungsgemäßen Polycarbonaten auch andere Polymere zugemischt werden, z.B. Polyolefine, Polyurethane, Polystyrol.

Der Zusatz dieser Stoffe erfolgt vorzugsweise auf herkömmliche Aggregaten zum fertigen Polycarbonat, kann jedoch, je nach den Erfordernissen, auf einer anderen Stufe des erfindungsgemäßen Verfahrens erfolgen.

Darüber hinaus ist für besondere Anwendungen auch die Modifizierung der Polycarbonate durch Einkondensation von Blöcken, Segmenten und Comonomeren möglich, z.B. Siloxanblöcken mit OH-Endgruppen, aromatische und aliphatische Polyester mit OH- und Carbonsäure-Endgruppen, Polyphenylsulfid-Blöcke mit OH-Endgruppen, Polyphenylenoxid-Blöcke mit OH-Endgruppen.

Die erfindungsgemäß hergestellten Polycarbonate eignen sich für die üblichen Anwendungsgebiete, also in der Elektrotechnik, im Bausektor und im Kraftfahrzeugbau somit z.B. als Trägermaterial für Datenspeicher, für Stegplatten zur Abdeckung oder als Gehäusematerial von elektronischen Geräten.

## Beispiele

### Vergleichsbeispiel 1

In einem 500 ml Dreihalskolben mit Rührer, Innenthermometer und Vigreuxkolonne (30 cm, verspiegelt) mit Brücke werden 114,15 g (0,500 mol) Bisphenol A und 113,54 g (0,530 mol) Diphenylcarbonat eingewogen. Die Apparatur wird durch Anlegen von Vakuum und Spülen mit Stickstoff (3 mol) vom Luftsauerstoff befreit und das Gemisch auf 150 °C aufgeheizt. Jetzt werden 0,00029 g ($5*10^{-4}$ mol-%) Natriumphenolat, bezogen auf Bisphenol A, als 1%ige wäßrige Lösung zugegeben und das entstehende Phenol bei 100 mbar abdestilliert. Gleichzeitig wird die Temperatur bis auf 250 °C gesteigert. Nach 1 Stunde wird das Vakuum auf 10 mbar verbessert. Durch Absenken des Vakuums auf 0,5 mbar und Temperaturerhöhung auf 280 °C wird die Polykondensation erreicht. Man erhält ein lösungsmittelfreies Polycarbonat mit einer rel. Lösungsviskosität von 1,388 (Dichlormethan, 25 °C, 5 g/l). Der Gehalt an Verzweiger der Formel (VI) im hergestellten Polycarbonat beträgt 350 ppm.

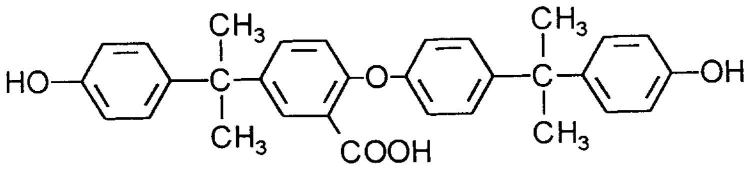

Formel (VI)

Beispiel 1

In einem 500 ml Dreihalskolben mit Rührer, Innenthermometer und Vigreuxkolonne (30 cm, verspiegelt) mit Brücke werden 114,15 g (0,500 mol) Bisphenol A und 113,54 g (0,530 mol) Diphenylcarbonat eingewogen. die Apparatur wird durch Anlegen von Vakuum und Spülen mit Stickstoff (3 mol) vom Luftsauerstoff befreit und das Gemisch auf 150 °C aufgeheizt. Jetzt werden 0,000349 g ($5*10^{-4}$ Mol-%) 1,5,7-Triazabicyclo-[4,4,0]-dec-5-en, bezogen auf Bisphenol A, als 1 %ige wäßrige Lösung zugegeben und das entstehende Phenol bei 100 mbar abdestilliert. Gleichzeitig wird die Temperatur bis auf 250 °C gesteigert. Nun wird das Vakuum stufenweise bis auf 1 mbar verbessert und die Temperatur auf 260 °C erhöht. Anschließend wird die Temperatur auf 280 °C erhöht und bei 0,1 mbar 1,5 Stunden gerührt. Man erhält ein farbhelles, lösungsmittelfreies Polycarbonat mit einer rel. Lösungsviskosität von 1,255 (Dichlormethan, 25 °C, 5 g/l). Der Gehalt an Verzweiger der Formel (VI) im hergestellten Polycarbonat beträgt 11 ppm. Der phenolische OH-Wert des Polycarboantes beträgt 210 ppm.

Beispiel 2

Wie Beispiel 1, nur werden 0,000695 g ($1*10^{-3}$ mol-%) 1,5,7-Triazabicyclo-[4,4,0]-dec-5-en eingesetzt. Man erhält ein farbhelles, lösungsmittelfreies Polycarbonat mit einer rel. Lösungsviskosität von 1,283 (Dichlormethan, 25 °C, 5 g/l). Der Gehalt an Verzweiger der Formel (VI) im hergestellten Polycarbonat beträgt 15 ppm. Der phenolische OH-Wert des Polycarbonats beträgt 300 ppm.

Beispiel 3

Wie Beispiel 1, nur es wird bei 300 °C 1,5 Stunden in der letzten Stufe der Polykondensation polymerisiert. Man erhält ein farbhelles, lösungsmittelfreies Polycarbonat mit einer rel. Lösungsviskosität von 1,309 (Dichlormethan, 25 °C, 5 g/l). Der Gehalt an Verzweiger der Formel (VI) im hergestellten Polycarbonat beträgt 25 ppm. Der phenolische OH-Wert des Polycarbonats beträgt 283 ppm.

Beispiel 4

In einem 500 ml Dreihalskolben mit Rührer, Innenthermometer und Vigreuxkolonne (30 cm, verspiegelt) mit Brücke werden 114,15 g (0,500 mol) Bisphenol A und 113,54 g (0,530 mol) Diphenylcarbonat eingewogen. Die Apparatur wird durch Anlegen von Vakuum und Spülen mit Stickstoff (3 mal) vom Luftsauerstoff befreit und das Gemisch auf 150 °C aufgeheizt. Jetzt werden 0,000349 g ($5*10^{-4}$ mol-%) 1,5,7-Triazabicyclo-[4,4,0]-dec-5-en, bezogen auf Bisphenol A, als 1 %ige wäßrige Lösung zugegeben und das entstehende Phenol bei 100 mbar abdestilliert. Gleichzeitig wird die Temperatur bis auf 250 °C gesteigert. Nun wird das Vakuum stufenweise bis auf 1 mbar verbessert und die Temperatur auf 260 °C erhöht. Man erhält ein farbhelles, lösungsmittelfreies Oligocarbonat mit einer rel. Lösungsviskosität von 1,157 (Dichlormethan, 25 °C, 5 g/l). Der Gehalt an Verzweiger der Formel (VI) im hergestellten Oligocarbonat beträgt <2 ppm. Dem Oligocarbonat werden nun 0,0001 g NaOH ($5*10^{-4}$ mol-%), bezogen auf Bisphenol A, als 1 %ige wäßrige Lösung zugegeben und das Oligocarbonat bei 280 °C und 0,1 mbar 1,5 Stunden gerührt. Man erhält ein farbhelles, lösungsmittelfreies Polycarbonat mit einer rel. Lösungsviskosität von 1,333 (Dichlormethan, 25 °C, 5 g/l). Der Gehalt an Verzweiger der Formel (VI) im hergestellten Polycarbonat beträgt 43 ppm. Der phenolische OH-Wert des Polycarbonats beträgt 241 ppm.

Beispiel 5

In einem 500 ml Dreihalskolben mit Rührer, Innenthermometer und Vigreuxkolonne (30 cm, verspiegelt) mit Brücke werden 114,15 g (0,500 mol) Bisphenol A und 113,54 g (0,530 mol) Diphenylcarbonat eingewogen. Die Apparatur wird durch Anlegen von Vakuum und Spülen mit Stickstoff (3 mol) vom Luftsauerstoff befreit und das Gemisch auf 150 °C aufgeheizt. Jetzt werden 0,000349 g ($5*10^{-4}$ mol-%) 1,5,7-Triazabicyclo-[4,4,0]-dec-5-en, bezogen auf Bisphenol A, als 1 %ige wäßrige Lösung zugegeben und das entstehende Phenol bei 100 mbar abdestilliert. Gleichzeitig wird die Temperatur bis auf 250 °C gesteigert. Nun wird das Vakuum stufenweise bis auf 1 mbar verbessert und die Temperatur auf 280 °C erhöht. Man erhält ein farbhelles, lösungsmittelfreies Oligocarbonat mit einer rel. Lösungsviskosität von 1,203 (Dichlormethan, 25 °C, 5 g/l). Der Gehalt an Verzweiger der Formel (VI) im hergestellten Oligocarbonat beträgt <2 ppm. Dem Oligocarbonat werden nun 0,0001 g NaOH ($5*10^{-4}$ mol-%), bezogen auf Bisphenol A, als 1 %ige wäßrige Lösung zugegeben und das Oligocarbonat bei 280 °C und 0,1 mbar 1,5 Stunden gerührt. Man erhält ein farbhelles, lösungsmittelfreies Polycarbonat mit einer rel. Lösungsviskosität von 1,314 (Dichlormethan, 25 °C, 5 g/l). Der Gehalt an Verzweiger der Formel (VI) im hergestellten Polycarbonat beträgt 32 ppm. Der phenolische OH-Wert des Polycarbonats beträgt 290 ppm.

Beispiel 6

Wie Beispiel 1, nur werden 0,0090 g ($1*10^{-2}$ mol-%) Guanidincarbonat eingesetzt. Man erhält ein farbhelles, lösungsmittelfreies Polycarbonat mit einer rel. Lösungsviskosität von 1,282 (Dichlormethan, 25 °C, 5 g/l). Der Gehalt an Verzweiger der Formel (VI) im hergestellten Polycarbonat beträgt 54 ppm. Der phenolische OH-Wert des Polycarbonats beträgt 360 ppm.

Beispiel 7

Wie Beispiel 1, nur werden 0,000765 g ($1*10^{-3}$ mol-%) 7-Methyl-1,5,7-triazabicyclo-[4,4,0]-dec-5-en eingesetzt. Man erhält ein farbhelles, lösungsmittelfreies Polycarbonat mit einer rel. Lösungsviskosität von 1,230 (Dichlormethan, 25 °C, 5 g/l). der Gehalt an Verzweiger der Formel (VI) im hergestellten Polycarbonat beträgt 10 ppm. Der phenolische OH-Wert des Polycarbonats beträgt 180 ppm.

Beispiel 8

Wie Beispiel 1, nur werden 0,00105 g ($1*10^{-3}$ mol-%) N,N-Diphenylguanidin eingesetzt. Man erhält ein farbhelles, lösungsmittelfreies Polycarbonat mit einer rel. Lösungsviskosität von 1,271 (Dichlormethan, 25 °C, 5 g/l). Der Gehalt an Verzweiger der Formel (VI) im hergestellten Polycarbonat beträgt 10 ppm. Der phenolische OH-Wert des Polycarbonats beträgt 320 ppm.

Beispiel 9

Wie Beispiel 1, nur werden 0,00236 g ($5*10^{-4}$ mol-%) 7,7'-Dodecyliden-di-1,5,7-triazabicyclo-[4,4,0]-dec-5-en eingesetzt. Man erhält ein farbhelles, lösungsmittelfreies Polycarbonat mit einer rel. Lösungsviskosität von 1,254 (Dichlormethan, 25 °C, 5 g/l). Der Gehalt an Verzweiger der Formel (VI) im hergestellten Polycarbonat beträgt 8 ppm. Der phenolische OH-Wert des Polycarbonats beträgt 230 ppm.

Beispiel 10

5 130 g (22,5 mol) Bisphenol A, 5 152 g (24,07 mol) Diphenylcarbonat und 31,26 mg 1,5,7-Triazabicyclo-[4,4,0]-dec-5-en ($1*10^{-3}$ mol-%) werden in einem 25 l Rührbehälter eingewogen. Der Behälter wird mit Stickstoff inertisiert und die Rohstoffe werden in 15 Minuten auf 200 °C erhitzt. Bei einer Massetemperatur von 100 °C wird der Rührer eingeschaltet und ein Vakuum von 300 mbar angelegt. Die Temperatur wird eine Stunde bei 200 °C gehalten und freigesetztes Phenol über eine Kolonne abdestilliert. Innerhalb einer weiteren Stunde wird die Temperatur auf 250 °C erhöht und das Vakuum auf 100mbar und anschließend bei 250 °C in 30 Minuten auf 10 mbar verbessert. Nach Erhöhung der Massetemperatur auf 290 °C wird bei dieser Temperatur im Hochvakuum polykondensiert. Nach Belüften mit Stickstoff wird das Polycarbonat aus dem Kessel ausgetragen und granuliert. Die relative Lösungsviskosität des isolierten Polycarbonats beträgt 1,213 (Dichlormethan, 25 °C, 5 g/l), der Gehalt an Verzweiger der Formel (VI) 30 ppm.

Beispiel 11

5 130 g (22,5 mol) Bisphenol A, 5 104 g (23,85 mol) Diphenylcarbonat und 106,15 mg 7,7'-Dodecyliden-di-1,5,7-triazabicyclo-[4,4,0]-dec-5-en ($1*10^{-3}$ mol%) werden in einem 25 l Rührbehälter eingewogen. Der Behälter wird mit Stickstoff inertisiert und die Rohstoffe werden in 15 Minuten auf 200 °C erhitzt. Bei einer Massetemperatur von 100 °C wird der Rührer eingeschaltet und ein Vakuum von 300 mbar angelegt. Die Temperatur wird eine Stunde bei 200 °C gehalten und freigesetztes Phenol über eine Kolonne abdestilliert. Innerhalb einer weiteren Stunde wird die Temperatur auf 250 °C erhöht und das Vakuum auf 100 mbar und anschließend bei 250 °C in 30 Minuten auf 10 mbar verbessert. Nach Erhöhung der Massetemperatur auf 290 °C wird bei dieser Temperatur polykondensiert. Nach Belüften mit Stickstoff wird das Polycarbonat aus dem Kessel ausgetragen und granuliert. Die relative Lösungsviskosität des isolierten Polycarbonats beträgt 1,243 (Dichlormethan, 25 °C, 5 g/l), der Gehalt an Verzweiger der Formel (VI) 50 ppm.

Beispiel 12

5 130 g (22,5 mol) Bisphenol A, 5 104 g (23,85 mol) Diphenylcarbonat und 31,26 mg 1,5,7-Triazabicyclo-[4,4,0]-dec-5-en ($1*10^{-3}$ mol-%) werden in einem 25 l Rührbehälter eingewogen. Der Behälter wird mit Stickstoff inertisiert und die Rohstoffe werden in 15 Minuten auf 200 °C erhitzt. Bei einer Massetemperatur von 100 °C wird der Rührer eingeschaltet und ein Vakuum von 300 mbar angelegt. Die Temperatur wird eine Stunde bei 200 °C gehalten und freigesetztes Phenol über eine Kolonne abdestilliert. Innerhalb einer weiteren Stunde wird die Temperatur auf 250 °C erhöht und das Vakuum auf 100 mbar und anschließend bei 250 °C in 30 Minuten auf 10 mbar verbessert. Nach Erhöhung der Massetemperatur auf 290 °C und Belüften mit Stickstoff werden 13 mg Natriumphenolat ($5*10^{-4}$ mol-%) zugegeben, Hochvakuum angelegt und bei 290 °C polykondensiert. Nach Belüften mit Stickstoff wird das Polycarbonat aus dem Kessel ausgetragen und granuliert. Die relative Lösungsviskosität des isolierten Polycarbonats beträgt 1,289 (Dichlormethan, 25 °C, 5 g/l), der Gehalt an Verzweiger der Formel (VI) 90 ppm.

Beispiel 13

5 130 g (22,5 mol) Bisphenol A, 5 104 g (23,85 mol) Diphenylcarbonat und 62,52 mg 1,5,7-Triazabicyclo-[4,4,0]-dec-5-en ($2*10^{-3}$ mol-%) werden in einem 25 l Rührbehälter eingewogen. Der Behälter wird mit Stickstoff inertisiert und die Rohstoffe werden in 15 Minuten auf 200 °C erhitzt. Bei einer Massetemepratur von 100 °C wird der Rührer eingeschaltet und ein Vakuum von 300 mbar angelegt. Die Temperatur wird eine Stunde bei 200 °C gehalten und freigesetztes Phenol über eine Kolonne abdestilliert. Innerhalb einer weiteren Stunde wird die Temperatur auf 250 °C erhöht und das Vakuum auf 100 mbar und anschließend bei 250 °C in 30 Minuten auf 5 mbar verbessert. Nach Erhöhung der Massetemperatur auf 290 °C wird mit Stickstoff belüftet und das gebildete Oligomer aus dem Kessel ausgetragen und granuliert. Es hat zu diesem Zeitpunkt eine relative Lösungsviskosität von 1,153 (Dichlormethan, 25 °C, 5 g/l). Dieses Oligocarbonat wird auf einer ZSK 32 (100 Upm; 300 °C; 0,8 mbar; 2,0 kg/h) polykondensiert. Die realtive Lösungsviskosität des so isolierten Polycarbonats beträgt 1,273 (Dichlormethan, 25 °C, 5 g/l), der Gehalt an Verzweiger der Formel (VI) 20 ppm.

Beispiel 14

5 130 g (22,5 mol) Bisphenol A, 5 104 g (23,85 mol) Diphenylcarbonat und 31,26 mg 1,5,7-Triazabicyclo-[4,4,0]-dec-5-en ($1*10^{-3}$ mol-%) werden in einem 25 l Rührbehälter eingewogen. Der Behälter wird mit Stickstoff inertisiert und die Rohstoffe werden in 15 Minuten auf 200 °C erhitzt. Bei einer Massetemepratur von 100 °C wird der Rührer eingeschaltet und ein Vakuum von 300 mbar angelegt. Die Temperatur wird eine Stunde bei 200 °C gehalten und freigesetztes Phenol über eine Kolonne abdestilliert. Innerhalb einer weiteren Stunde wird die Temperatur auf 250 °C erhöht und das Vakuum auf 100 mbar und anschließend bei 250 °C in 30 Minuten auf 5 mbar verbessert. Nach Erhöhung der Massetemperatur auf 290 °C wird mit Stickstoff belüftet und das gebildete Oligomer aus dem Kessel ausgetragen und granuliert. Es hat zu diesem Zeitpunkt eine relative Lösungsviskosität von 1,147 (Dichlormethan, 25 °C, 5 g/l). Nach Auftrudeln von $1*10^{-3}$ mol-% Natriumphenolat auf das Oligocarbonat wiwrd auf einer ZSK 32 (100 Upm; 300 °C; 0,8 mbar; 4,0 kg/h) polykondensiert. Die relative Lösungsviskosität des isolierten Polycarbonats beträgt 1,303 (Dichlormethan, 25 °C, 5 g/l), der Gehalt an Verzweiger der Formel (VI) 35 ppm.

Beispiel 15

Wie Beispiel 1, nur werden 0,0017 g (1*$10^{-3}$ Mol-%) 7-Cumylphenyl-1,5,7-triazabicyclo-[4,4,0]-dec-5-en eingesetzt. Man erhält ein farbhelles, lösungsmittelfreies Polycarbonat mit einer rel. Lösungsviskosität von 1,263 (Dichlormethan, 25 °C, 5 g/l). Der Gehalt an Verzweiger der Formel (VI) im hergestellten Polycarbonat beträgt 12 ppm. Der phenolische OH-Wert des Polycarbonats beträgt 245 ppm.

Beispiel 16

Wie Beispiel 1, nur werden 0,00112 g (1*$10^{-3}$ Mol-%) 7-Hexyl-1,5,7-triazabicyclo-[4,4,0]-dec-5-en eingesetzt. Man erhält ein farbhelles, lösungsmittelfreies Polycarbonat mit einer rel. Lösungsviskosität von 1,278 (Dichlormethan, 25 °C, 5 g/l). Der Gehalt an Verzweiger der Formel (VI) im hergestellten Polycarbonat beträgt 22 ppm. Der phenolische OH-Wert des Polycarbonats beträgt 285 ppm.

**Patentansprüche**

**1.** Umesterungs-Verfahren zur Herstellung von thermoplastischen, lösungsmittelfreien Polycarbonaten ausgehend von aromatischen Diphenolen, Kohlensäurediarylestern und gegebenenfalls Verzweigern und/oder Monophenolen sowie Katalysatoren bei Temperaturen zwischen 80 °C und 400 °C und Drucken von 1000 mbar bis 0,01 mbar, dadurch gekennzeichnet, daß man Katalysatoren, die sich vom Guanidin ableiten und entweder der Formel (I),

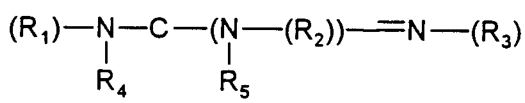 ,

worin
$R_1$, $R_2$, $R_3$. $R_4$, $R_5$, = H, Alkyl, Alkenyl, Cycloalkyl, Cycloalkenyl oder Aryl und
die Reste R, $R_2$, $R_3$, $R_4$ und $R_5$ gleich oder verschieden sein können,
oder der Formel (II),

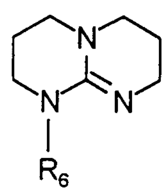

worin
$R_6$ = H, Alkyl, Aryl, Cycloalkyl, Polystyrol-Reste, substituierte Aryle, substituierte Alkyle oder ein Rest
$COR_7$ mit $R_7$ = Alkyl, Aryl, NH-Alkyl, NH-Aryl, Alkoxy, Aryloxy und Hydroxyalkyl, sein kann,
oder der Formel (III),

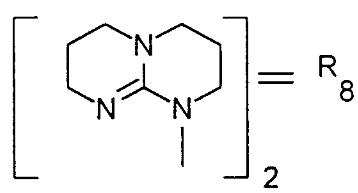

worin
$R_8$ Alkyliden, Cycloalkyliden oder Arylalkyliden sein kann,

oder der Formel (IV),

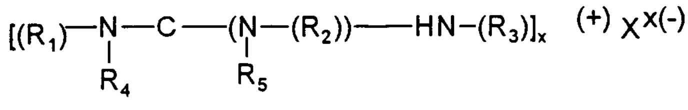

worin

X = Carbonat, Acetat, Nitrat, Hydroxid, Halogenid, Phenolat, Diphenolat, Phosphat, Hydrogenphosphat oder Boranat sein kann und

$R_1$, $R_2$, $R_3$, $R_4$, $R_5$ = H, Alkyl, Alkenyl, Cycloalkyl, Cycloalkenyl oder Aryl und

die Reste $R_1$, $R_2$, $R_3$, $R_4$ und $R_5$ gleich oder verschieden sein können, entsprechen, einsetzt.

**2.** Verfahren zur Herstellung der aromatischen Polycarbonate gemäß Anspruch 1, dadurch gekennzeichnet, daß die Katalysatoren in Mengen von $10^{-2}$ bis $10^{-8}$ Mol, bezogen auf ein Mol Diphenol, eingesetzt werden.

**3.** Verfahren zur Herstellung der aromatischen Polycarbonate gemäß Ansprüchen 1 und 2, dadurch gekennzeichnet, daß der Gehalt an Verzweigerstruktur der Formel (Va)

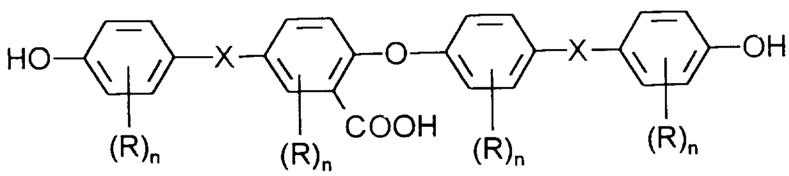 (Va)

mit

X = $C_1$-$C_8$-Alkyliden oder Cycloalkyliden, S oder einer Einfachbindung und

R = $CH_3$, Cl oder Br und

n = Null, 1 oder 2,

im Polycarbonat einen Wert nach Totalverseifung und HPLC-Bestimmung von 300 ppm nicht übersteigt.

**4.** Verfahren zur Herstellung der aromatischen Polycarbonate gemäß Ansprüchen 1 und 2, dadurch gekennzeichnet, daß die Katalysatoren in Kombination mit Alkali/Erdalkalimetallkatalysatoren eingesetzt werden.

Europäisches Patentamt

# EUROPÄISCHER RECHERCHENBERICHT

Nummer der Anmeldung
EP 94 10 8615

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.5) |
|---|---|---|---|
| A | EP-A-0 487 208 (THE BRITISH PETROLEUM CO. P.L.C.)<br>* Anspruch 1; Beispiel 2 *<br>--- | 1,2 | C08G64/30 |
| A | US-A-4 262 113 (D.B.G.JAQUISS ET AL.)<br>* Ansprüche 1,3; Beispiel 2 *<br>--- | 1,2 | |
| D,A | EP-A-0 535 261 (DAICEL CHEMICAL INDUSTRIES, LTD.)<br>* Ansprüche 1,3-5,7 *<br>----- | 1,2,4 | |
| | | | RECHERCHIERTE SACHGEBIETE (Int.Cl.5) |
| | | | C08G |

Der vorliegende Recherchenbericht wurde für alle Patentansprüche erstellt

| Recherchenort | Abschlußdatum der Recherche | Prüfer |
|---|---|---|
| BERLIN | 23. September 1994 | Angiolini, D |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
.........................................................................
& : Mitglied der gleichen Patentfamilie, übereinstimmendes Dokument